# EUROPEAN PATENT SPECIFICATION

(11) **EP 1 434 327 B1**
(45) Date of publication and mention of the grant of the patent: **07.03.2007**
(21) Application number: 03027915.2
(22) Date of filing: 04.12.2003
(51) Int. Cl.: H02G 3/08, H02G 3/14

(54) **Junction box particularly for electrical systems**
Verbindungsdose vorzugsweise für elektrische Einrichtungen
Boitier de raccordement spécialement pour systèmes électriques

(30) Priority: 06.12.2002 IT mi20022602
(43) Date of publication of application: 30.06.2004
(73) Proprietor: GEWISS S.p.A., I-24069 Cenate Sotto (Bergamo) (IT)
(72) Inventor: Bosatelli, Domenico, 24069 Cenate Sotto (IT)
(74) Representative: Forattini, Amelia

(56) References cited:
- US-A- 5 361 925
- US-A- 5 531 345

## Description

The present invention relates to an improved junction box particularly for electrical systems.

Junction boxes are used to connect and branch a plurality of systems and are generally composed of a base and a cover that is associated with the base by way of quarter-turn screws and with the interposition of a gasket that ensures watertightness.

The base is provided with a plurality of inlets protected by appropriate grommets and all the components are generally made of plastics.

US-5 531 345 and US-5 361 925 disclose electrical connection boxes of this type

The aim of the present invention is to provide a junction box that is improved with respect to conventional boxes.

Within this aim, an object of the invention is to provide a box that ensures adequate protection against the penetration of solid objects and water.

Another object of the invention is to provide a box that allows quick and easy assembly and access.

Another object is to provide a box that is functionally superior to conventional junction boxes while having a structure that is simple and economically advantageous from a manufacturing standpoint.

This aim and these and other objects that will become better apparent hereinafter are achieved by a junction box particularly for electrical systems as claimed in the appended claims.

Further characteristics and advantages will become better apparent from the description of preferred but not exclusive embodiments of the invention, illustrated by way of non-limiting example in the accompanying drawings, wherein;

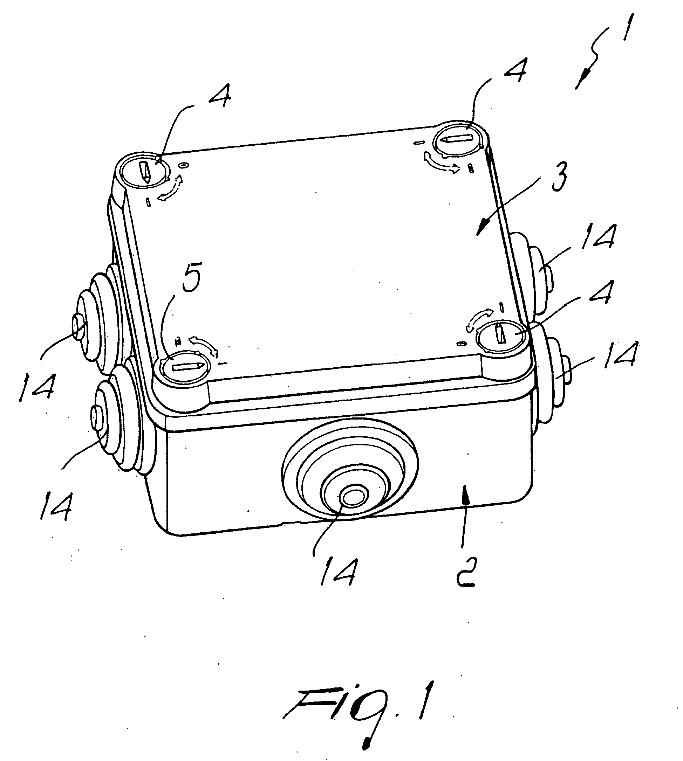

Figure 1 is a front perspective view of the casing according to the invention, shown in the closed condition;
Figure 2 is a front perspective view of the casing according to the invention, shown in the open condition;
Figure 3 is a bottom perspective view of the cover, showing the system for retaining the cover on the casing, in the open condition;

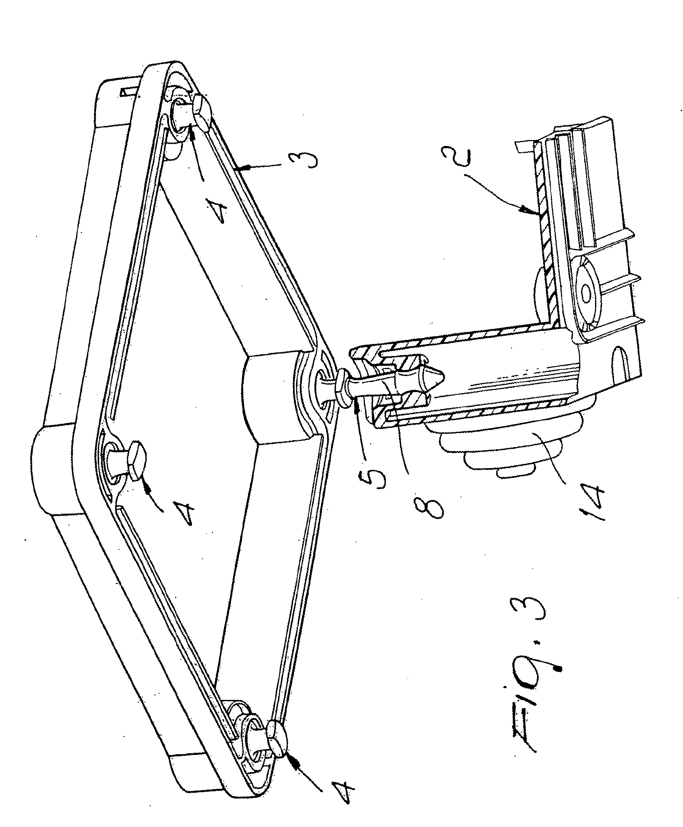

Figure 4 is a view, in a larger scale with respect to Figure 3, of the retention system;
Figure 5 is a front view of the casing, showing one of the closure screws;

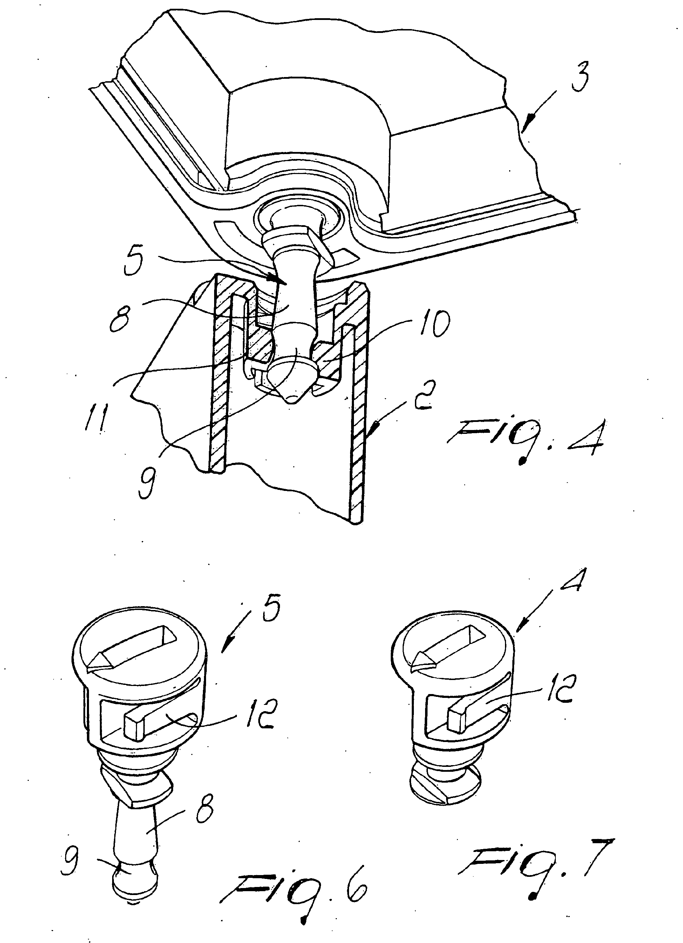

Figure 6 is a perspective view of a closure and retention screw;

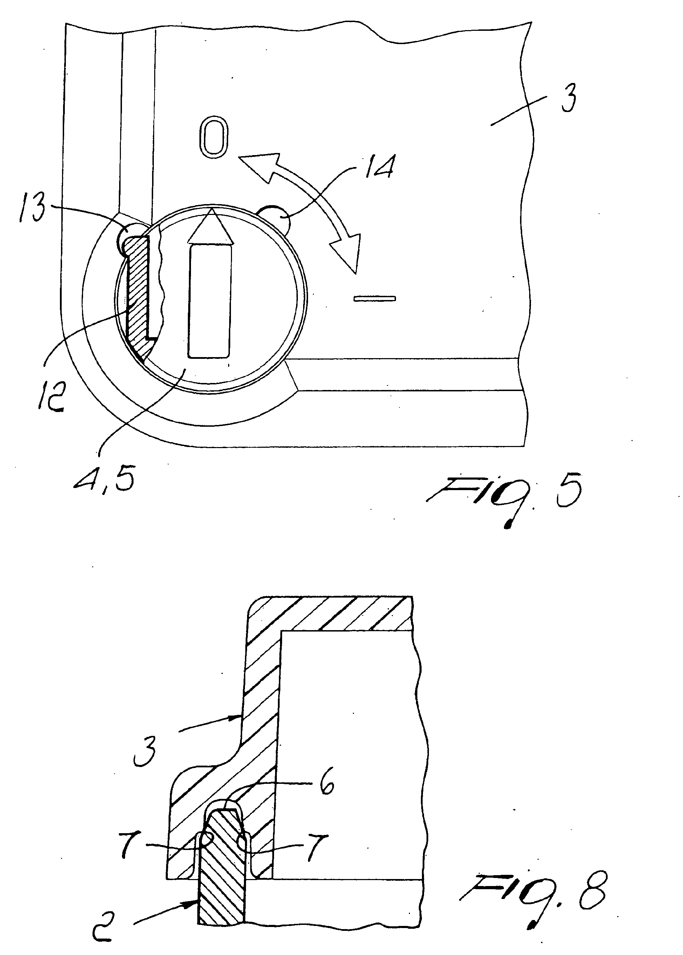

Figure 7 is a perspective view of a closure screw;
Figure 8 is a partial enlarged-scale sectional view, taken along a transverse plane, of the complementary profiles of the cover and of the casing, shown in the closed condition.

With reference to the cited figures, a junction box according to the invention, generally designated by the reference numeral 1, includes a casing 2 that can be closed by way of a cover 3, by means of closure screws 4 and 5 of the quarter-turn type.

The casing 2 includes, in a per se known manner, a plurality of inlets protected by appropriate grommets 14. All the components are made of plastics.

In order to achieve adequate protection against the penetration of solid objects and water, without using a gasket interposed between the cover and the casing as in conventional boxes, according the present invention the casing 2 and the cover 3 have complementary profiles, designated by the reference numerals 6 and 7 respectively.

The seal is provided by virtue of the fact that the cover 3 is pressed onto the casing 2 with a coupling stroke of adequate extent in the vertical direction, so that the perimetric cusps 7 of the cover mate with the sealing profile 6 of the base, being pushed inward and outward, these thrusts joining the two parts and providing the seal along the entire perimeter.

The cover is fixed to the casing by means of quarter-turn screws, designated by the reference numerals 4 and 5.

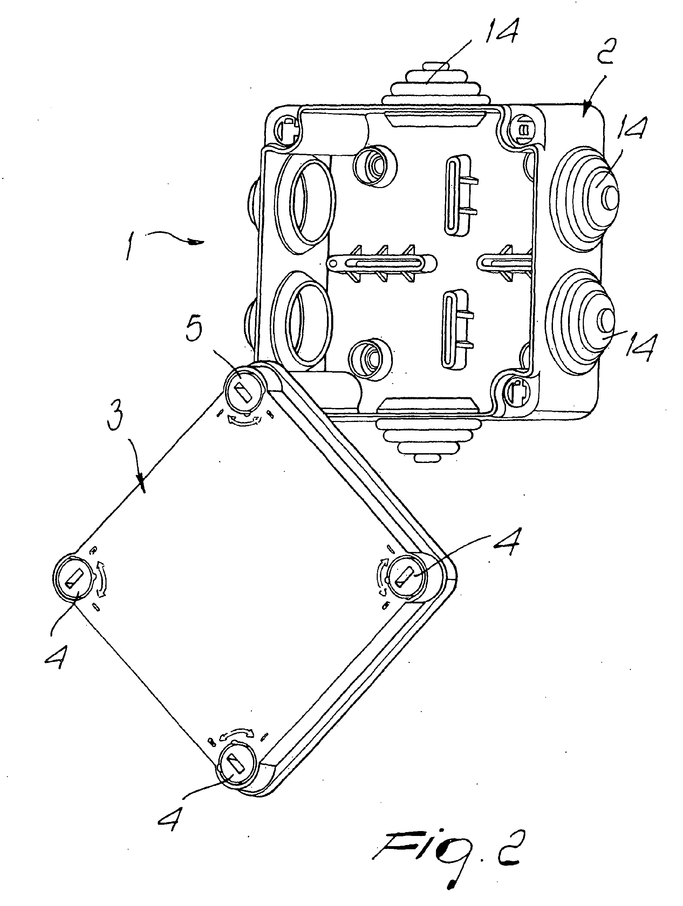

According to the present invention, one of the closure screws, designated by the reference numeral 5, includes an elongated stem 8 that can be locked in the casing by virtue of a snap-acting locking means, so that once the other screws have been unscrewed the cover can be arranged in an open condition with respect to the casing but is retained by the retaining screw 5, as shown in Figure 2.

The snap-acting locking means is constituted by a recess 9 that is formed in the end of the elongated stem 8 of the screw 5 and is engaged by an annular raised portion 10 that is formed in the retention seat of the stem 8, which in turn is formed within a block 11 of the casing 2.

The cover 3 can be completely removed from the casing 2 simply by forcing the extraction of the stem 8 from the seat in the casing 2, which undergoes elastic deformation in order to release the stem.

The closure screws 4 and 5 have a rotation-locking system that prevents the screw from remaining in an intermediate position between the extreme closed position (I) and the extreme open position (O).

The locking system comprises an elastic tooth 12 that is formed monolithically in the screw 4, 5 in a tangential position and is adapted to engage two slots, respectively designated by the reference numerals 13 and 14, that are formed in the seat of the cover 3 that accommodates the screw. The tooth 12 locks, by cooperating with one of the slots, the screw in the open or closed position, preventing it from assuming an intermediate position by way of its elastic return.

In practice it has been found that the invention achieves the intended aim and objects, by providing a junction box that preserves all the features of conventional boxes as regards dimensions, cable entry system, coupling of the accessories to the base, manual fixing, et cetera, and is structurally and functionally improved with respect to them.

The improved structural and functional characteristics have been achieved with a reduced number of components, providing a product that is also economically competitive.

## Claims

1. A junction box particularly for electrical systems, comprising a casing that can be closed by a cover, the cover and the casing having complementary profiles that provide watertightness when the casing is closed by said cover, the cover being fastened to the casing by means of quarter-turn screws, **characterized in that** it comprises a means for retaining the cover that is constituted by one of the closure screws, which also acts as a retainer and comprises an elongated stem that can be locked in the casing by a snap-acting locking means so that once the other screws have been unscrewed the cover can be arranged in an open condition with respect to the casing but be retained by the retention screw.

2. The box according to claim 1, **characterized in that** the complementary profiles comprise perimetric cusps of the cover that mate with the sealing profile of the base, being pushed inward and outward, these thrusts joining the two parts and providing the seal along the entire perimeter.

3. The box according to claim 1, **characterized in that** the cover is pressed onto the casing with a coupling stroke in the vertical direction so that the perimetric cusps of the cover mate with the sealing profile of the base, being pushed inward and outward, said thrusts joining the two parts and providing the seal along the entire perimeter.

4. The box according to one or more of the preceding claims, **characterized in that** said snap-acting locking means is constituted by a recess that is formed in the end of the elongated stem of the screw and is suitable to be engaged by an annular raised portion that is formed in the stem retention seat, which in turn is formed within a block of the casing.

5. The box according to one or more of the preceding claims, **characterized in that** it is possible to remove completely the cover from the casing by forcing the extraction of the stem from the seat in the body, said seat undergoing elastic deformation in order to release said stem.

6. The box according to one or more of the preceding claims, **characterized in that** the closure screws have a rotation-locking system that prevents a screw from remaining in an intermediate position between the extreme closed and opened positions.

7. The box according to one or more of the preceding claims, **characterized in that** the locking system comprises an elastic tooth that is formed monolithically in the screw, in a tangential position, and is adapted to engage two slots formed in the seat of the cover that accommodates said screw; said tooth locking, by cooperating with one of the slots, the screw in the open or closed position, preventing it from assuming an intermediate position by way of its elastic return.

## Patentansprüche

1. Verbindungsdose, insbesondere für elektrische Systeme, aufweisend ein mittels einer Abdeckung verschließbares Gehäuse, wobei die Abdeckung und das Gehäuse komplementäre Profile besitzen, die eine Wasserdichtigkeit schaffen, wenn das Gehäuse mittels der Abdeckung verschlossen ist, wobei die Abdeckung an dem Gehäuse mittels Viertel-Drehungs-Schrauben befestigt ist,
**dadurch gekennzeichnet,**
**dass** sie ein Mittel zum Halten der Abdeckung umfasst, das durch eine der Verschlußschrauben ausgebildet ist, ebenfalls als Haltemittel wirkt und einen länglichen Schaft umfasst, der mittels eines schnappartigen Verriegelungsmittels in dem Gehäuse verriegelt werden kann, so dass die Abdeckung nach einem Lösen der anderen Schrauben in einem geöffneten Zustand bezüglich des Gehäuses, allerdings durch die Rückhalteschraube gehalten, angeordnet werden kann.

2. Dose nach Anspruch 1, **dadurch gekennzeichnet, dass** die komplementären Profile umlaufende Spitzen der Abdeckung umfassen, die zum Dichtprofil der Basis passen und nach innen und außen gedrückt werden, wobei diese Schübe die beiden Teile verbinden und die Dichtung entlang des gesamten Umfangs schaffen.

3. Dose nach Anspruch 1, **dadurch gekennzeichnet, dass** die Abdeckung mittels eines Verbindungshubs in der vertikalen Richtung auf das Gehäuse gepreßt wird, so daß die umlaufenden Spitzen des Gehäuses zu dem Dichtprofil der Basis passen und nach innen und außen gedrückt werden, wobei die Spitzen die beiden Teile verbinden und die Dichtung entlang dem gesamten Umfang schaffen.

4. Dose nach einem oder mehreren der vorhergehenden Ansprüche, **dadurch gekennzeichnet, dass** das Schnappverschlussmittel durch eine Ausnehmung ausgebildet ist, die in dem Ende des länglichen Zapfens der Schraube ausgebildet ist, und dazu geeignet ist, in einen ringförmig erhabenen Bereich einzugreifen, der in dem den Zapfen haltenden Sitz ausgebildet ist, der wiederum innerhalb eines Blockes des Gehäuses ausgebildet ist.

5. Dose nach einem oder mehreren der vorhergehenden Ansprüche, **dadurch gekennzeichnet, dass** es möglich ist, die Abdeckung vollständig von dem Gehäuse zu entfernen, indem die Auskopplung des Zapfens von dem Sitz in dem Körper erzwungen wird, wobei der Sitz eine elastische Deformation ausführt, um den Zapfen zu lösen.

6. Dose nach einem oder mehreren der vorhergehenden Ansprüche, **dadurch gekennzeichnet, dass** die Verschlussschrauben ein Dreh-Riegelsystem besitzen, das verhindert, dass eine Schraube in einer Stellung zwischen den äußeren geschlossenen und geöffneten Stellungen verbleibt.

7. Dose nach einem oder mehreren der vorhergehenden Ansprüche, **dadurch gekennzeichnet, dass** das Riegelsystem einen elastischen Nocken umfaßt, der in einer tangentialen Stellung einteilig in der Schraube ausgebildet ist und dazu vorgesehen ist, in zwei in dem Sitz der die Schraube aufnehmenden Abdeckung ausgebildete Schlitze einzugreifen, wobei der Nocken durch Zusammenwirken mit einem der Schlitze die Schraube in der offenen oder geschlossenen Stellung verriegelt und ein Annehmen einer Zwischenstellung durch deren elastische Rückkehr verhindert.

## Revendications

1. Boîte de raccordement en particulier pour des systèmes électriques, comportant un boîtier qui peut être fermé par un couvercle, le couvercle et le boîtier ayant des profils complémentaires qui assurent une étanchéité à l'eau lorsque le boîtier est fermé par ledit couvercle, le couvercle étant fixé sur le boîtier au moyen de vis à un quart de tour, **caractérisée en ce qu'**elle comporte des moyens pour retenir le couvercle qui sont constitués de l'une des vis de fermeture, qui agit également comme un dispositif de retenue et qui comporte une tige allongée qui peut être verrouillée dans le boîtier par des moyens de verrouillage à action d'encliquetage de sorte qu'une fois que les autres vis ont été desserrées, le couvercle peut être agencé dans un état ouvert par rapport au boîtier mais en étant retenu par la vis de maintien.

2. Boîte selon la revendication 1, **caractérisée en ce que** les profils complémentaires comportent des saillies sur le périmètre du couvercle qui s'apparient avec le profil d'étanchéité de la base, en étant poussées vers l'intérieur et vers l'extérieur, ces poussées réunissant les deux parties et assurant le joint le long de la totalité du périmètre.

3. Boîte selon la revendication 1, **caractérisée en ce que** le couvercle est pressé sur le boîtier en ayant une course d'assemblage dans la direction verticale de sorte que les saillies sur le périmètre du couvercle s'apparient avec le profil d'étanchéité de la base, en étant poussées vers l'intérieur et vers l'extérieur, lesdites poussées réunissant les deux parties et assurant le joint le long de la totalité du périmètre.

4. Boîte selon une ou plusieurs des revendications précédentes, **caractérisée en ce que** lesdits moyens de verrouillage à action d'encliquetage sont constitués d'un évidement qui est formé dans l'extrémité de la tige allongée de la vis et qui est adapté pour venir en prise avec une partie surélevée annulaire qui est formée dans l'appui de maintien de tige, qui est à son tour formé à l'intérieur d'un bloc du boîtier.

5. Boîte selon une ou plusieurs des revendications précédentes, **caractérisée en ce qu'**il est possible de retirer totalement le couvercle du boîtier en forçant l'extraction de la tige à partir de l'appui dans le corps, ledit appui subissant une déformation élastique afin de libérer ladite tige.

6. Boîte selon une ou plusieurs des revendications précédentes, **caractérisée en ce que** les vis de fermeture ont un système de verrouillage par rotation qui empêche une vis de rester dans une position intermédiaire entre les positions fermée et ouverte extrêmes.

7. Boîte selon une ou plusieurs des revendications précédentes, **caractérisée en ce que** le système de verrouillage comporte une dent élastique qui est formée d'un seul bloc dans la vis, dans une position tangentielle, et qui est adaptée pour venir en prise avec deux fentes formées dans l'appui du couvercle qui reçoit ladite vis, ladite dent verrouillant, par coopération avec l'une des fentes, la vis dans la position ouverte ou fermée, l'empêchant de prendre une position intermédiaire par son retour élastique.
